# EUROPEAN PATENT APPLICATION

(11) **EP 1 898 218 A2**
(43) Date of publication of application: **12.03.2008**
(21) Application number: 07017219.2
(22) Date of filing: 03.09.2007
(51) Int. Cl.: G01N 35/00

(54) **Cold insulation unit and measurement apparatus**

(30) Priority: 05.09.2006 JP 2006239904; 06.09.2006 JP 2006241167; 18.06.2007 JP 2007160055
(71) Applicant: FUJIFILM Corporation, Minato-ku Tokyo (JP)
(72) Inventor: Muraishi, Katsuaki, Ashigarakami-gun, Kanagawa (JP); Shimizu, Hitoshi, Ashigarakami-gun, Kanagawa (JP)
(74) Representative: Klunker . Schmitt-Nilson . Hirsch

(57) **Abstract**

Inside the upper housing 12 along the X direction of an upper corner part in the upper housing 12 of the measurement apparatus 10, a radiator 60 is provided. In the radiator 60, metal thin plates are stacked to form flow paths, and temperature control water is caused to flow in the flow paths to perform heat exchange between the temperature control wafer and air in the upper housing 12. On the opposite side of the radiator 60 to the upper housing 12, the radiator blowing fan 62 is provided. The air heat-exchanged by the radiator 60 is sent by the radiator blowing fan 62 inside the upper housing 12 in the Y direction. The measurement apparatus 10 may comprise a cold insulation unit 80. The cold insulation unit 80 includes a cold insulation vessel 82, a blowing fan 90, a radiator 92, and a heat-radiation fan 94.

## Description

### BACKGROUND OF THE INVENTION

### Field of the Invention

The present invention relates to a measurement apparatus which supplies a sample to a test substance to measure a reaction between the test substance and the sample, a cold insulation unit, and a measurement apparatus having the cold insulation unit.

### Description of the Related Art

In a measurement apparatus which supplies a sample to a test substance such as a physiologically active substance to measure a reaction between the test substance and the sample, in order to perform accurate measurement, differences between the temperatures of a test substance, a sample, buffer liquid, and the like on a measurement chip are required to be small in respective measurement states.

In order to perform temperature adjustment, in an apparatus described in Japanese Patent No. 3468091, for example, after a measurement chip is set on a measurement stage, the temperature adjustment is performed by a heater. However, when temperature adjustments are independently performed to the measurement chips, respectively, a throughput of measurement increases.

As measurement apparatuses which supply a sample to a physiologically active substance to measure a reaction between the physiologically active substance and the sample, measurement apparatuses of various types are developed. Some sample used in these measurement apparatuses need to be cooled immediately before a measurement. For this reason, a cold storage is arranged to stock the samples therein.

In a biochemical analyzing apparatus described in Japanese Patent Application Laid-Open (JP-A) No. 2005-291731, for example, the outside of a cooling vessel is covered with a heat insulating material, and a pipet is inserted through an admission port formed in an upper portion of the cooling vessel to access an internal reagent vessel, so that a reagent is taken out. In this scheme, since one access port for the pipet is used, a mechanism that moves the reagent vessel is required to access a different reagent vessel. In JP-A No. 2005-291731, reagent vessels are placed on a turntable, and the turntable is rotated to move a desired reagent vessel to an access port.

As a configuration which does not require a mechanism for moving a reagent vessel, it is possible to form a plurality of access ports to correspond with reagent vessels, respectively. However, since the access ports are open outside, it happens that a cold insulation function is deteriorated.

### SUMMARY OF THE INVENTION

The present invention has been made in view of the above circumstances and provides a cold insulation unit and a measurement apparatus.

A first aspect of the present invention provides a measurement apparatus, comprising: a housing which accommodates a measurement portion which supplies a sample to a test substance fixed to a measurement chip to measure a reaction between the test substance and the sample, a sample stock portion which stocks a plurality of samples, a measurement chip stock portion which stocks a plurality of measurement chips, and a buffer stock portion which stocks a buffer liquid to be supplied to the test substance, the housing comprising a heat insulating material; a radiator provided in the housing; a circulating section which circulates liquid supplied to the radiator; and a blowing section which diffuses air heat-exchanged by the radiator into the housing.

A second aspect of the present invention provides a cold insulation unit which performs cold insulation for a sample accommodated in a long sample pipe, comprising: a cold insulation vessel having an interior that is heat-insulated from the outside by a heat insulating material; a cooling section provided inside the cold insulation vessel and having a cooling side disposed toward the inside of the cold insulation vessel; a refrigerant member disposed at the cooling side of the cooling section, constituting a cooling space to cool a distal end portion of the sample pipe, and cooled by the cooling section; and a heat insulating member disposed at an upper side of the refrigerant member, having a through hole through which the sample pipe passes from an upper side and which is sealed by the sample pipe, and having a heat insulating material.

A third aspect of the present invention provides a measurement apparatus comprising: the cold insulation unit according to the second aspect of the present invention; and a liquid supply mechanism which can access the sample pipe, wherein a sample in the sample pipe is supplied to a physiologically active substance to measure a reaction between the physiologically active substance and the sample.

### BRIEF DESCRIPTION OF THE DRAWINGS

Embodiments of the present invention will be described in detail based on the following figures, wherein:
FIG 1 is a perspective view of an entire biosensor according to an embodiment of the present invention;
FIG 2 is a perspective view of an interior of the biosensor according to the embodiment of the present invention;
FIG 3 is a top view of the interior of the biosensor according to the embodiment of the present invention;
FIG 4 is a side view of the interior of the biosensor according to the embodiment of the present invention;
FIG 5 is a perspective view of a sample plate and a cold insulation vessel according to the embodiment of the present invention;
FIG 6 is a schematic configuration diagram of a cold insulation unit according to the embodiment of the present invention;
FIG. 7 is a perspective view of a measurement chip according to the embodiment of the present invention;
FIG 8 is an exploded perspective view of the measurement chip according to the embodiment of the present invention;
FIG 9 is a view showing a state in which a light beam is incident on a measurement region and a reference region of the measurement chip according to the embodiment of the present invention ;
FIG 10 is a view of one flow path member of the measurement chip according to the embodiment of the present invention when viewed from bottom;
FIG 11 is a perspective view showing a vertical drive mechanism of a dispensing head of the biosensor according to the embodiment of the present invention;
FIG 12 is schematic view of the biosensor according to the embodiment of the present invention near an optical measurement portion;
FIG 13 is a schematic configuration diagram of a variation of a cold insulation unit according to the embodiment of the present invention;
FIG 14 is a view showing a temperature gradient of the cold insulation unit according to the embodiment of the present invention;
FIG 15A is a table showing a relationship between a surface temperature and a gap distance of the cold insulation unit; and
FIG 15B is a graph showing the relationship between the surface temperature and the gap distance of the cold insulation unit.

### DETAILED DESCRIPTION OF THE INVENTION

Herebelow, an example of an exemplary embodiment of the present invention will be described in detail with reference to the drawings.

A biosensor 10 serving as a measurement apparatus according to an aspect of the present invention is a so-called surface plasmon sensor which measures an interaction between protein Ta serving as a test substance and a sample A by using surface plasmon resonance generated on a surface of a metal film. A cold insulation unit 80 according to an aspect of the present invention is arranged in the biosensor 10.

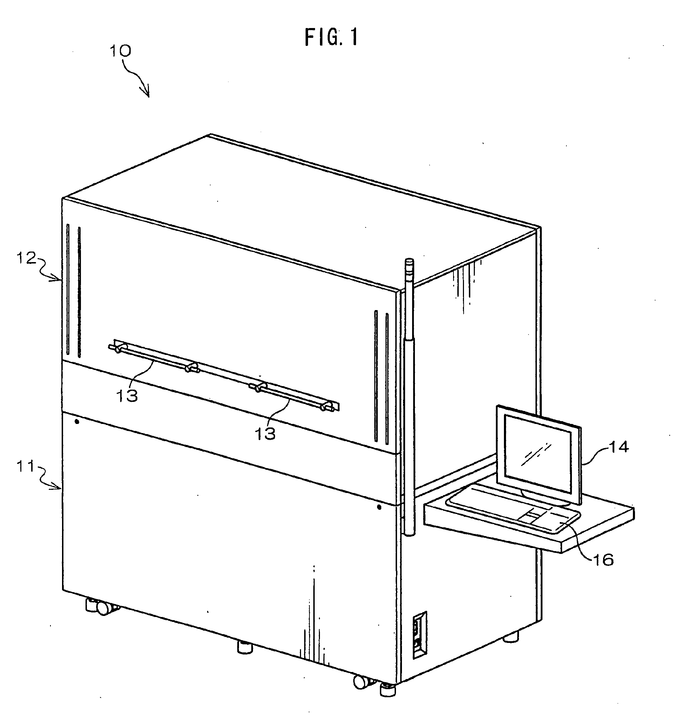

As shown in FIGS. 1 to 4, the biosensor 10 includes a lower housing 11 and an upper housing 12. The upper housing 12 consists of a heat insulating material and covers an entire upper half of the biosensor 10. The interior of the upper housing 12 is heat-insulated from the outside and the interior of the lower housing 11. A front side of the upper housing 12 can be open upward. A grip 13 is attached to the front side. A display 14 and an input portion 16 are installed outside the upper housing 12.

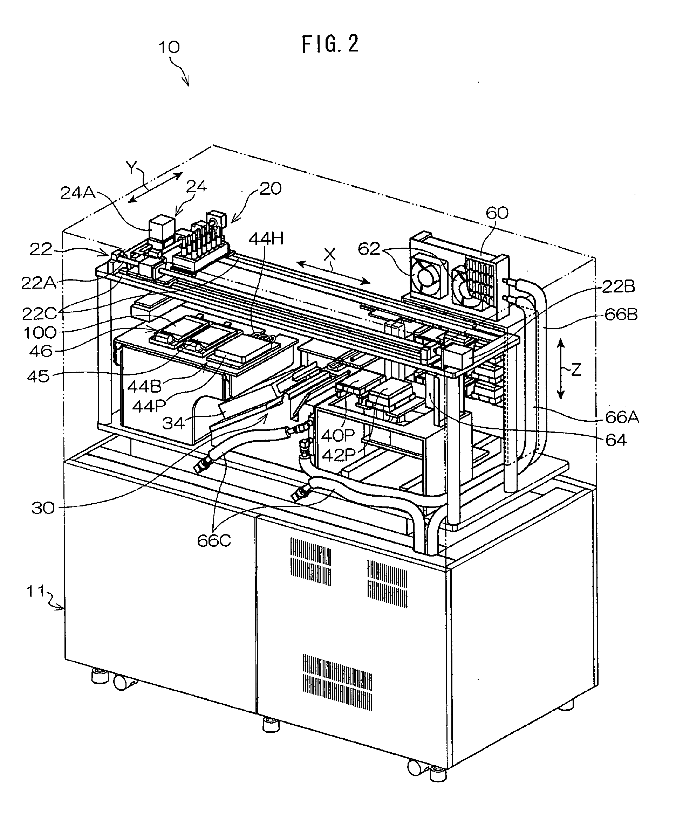

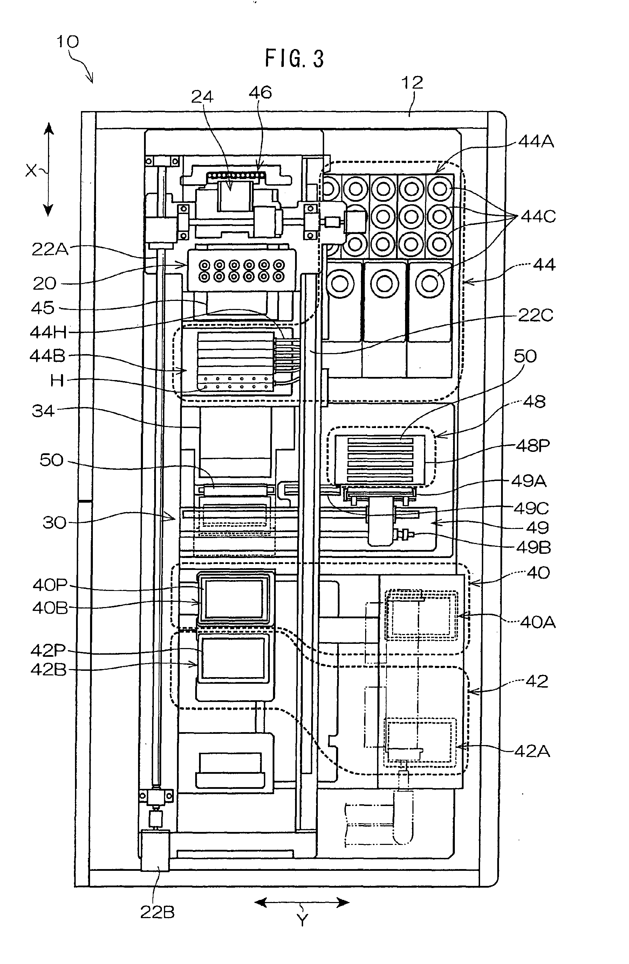

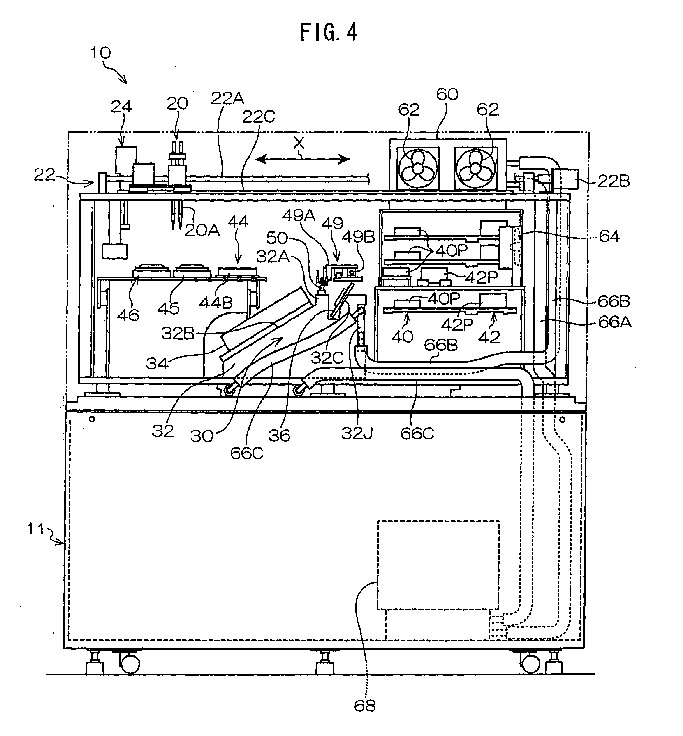

FIG 2 is a view showing the interior of the biosensor 10 from which the upper housing 12 is removed when viewed from a side opposing the view side of FIG 1. FIG 3 is a view of the interior of the housing when viewed from the top surface, and FIG 4 is a side view of the interior when viewed from the front side in FIG 2.

In the upper housing 12, a dispensing head 20, a measurement portion 30, a sample stock portion 40, a pipet chip stock portion 42, a buffer stock portion 44, a cold insulation portion 46, a measurement chip stock portion 48, a radiator 60, a radiator blowing fan 62, and a horizontal blowing fan 64.

The sample stock portion 40 is constituted by a sample stacking portion 40A and a sample setting portion 40B. In the sample stacking portion 40A, sample plates 40P on which different analyte solutions are stocked in respective cells are stacked in a Z direction and accommodated. In the sample setting portion 40B, one sample plate 40P is conveyed by a conveying mechanism (not shown) from the sample stacking portion 40A and set.

The pipet chip stock portion 42 is constituted by a pipet chip stacking portion 42A and a pipet chip setting portion 42B. In the pipet chip stacking portion 42A, pipet chip stockers 42P which hold a plurality of pipet chips are stacked in the Z direction (vertical direction) and accommodated. In the pipet chip setting portion 42B, one pipet chip stocker 42P is conveyed by a conveying mechanism (not shown) from the pipet chip stacking portion 42A and set.

The buffer stock portion 44 is constituted by a bottle accommodation portion 44A and a buffer supply portion 44B. In the bottle accommodation portion 44A, a plurality of bottles 44C in which buffer liquid is reserved is accommodated. In the buffer supply portion 44B, a buffer plate 44P is set. The buffer plate 44P is partitioned into a plurality of stripes. Buffer liquids having different concentrations are reserved in the partitions, respectively. In addition, holes H into which the pipet chips CP are inserted when the dispensing head 20 accesses the buffer plate 44P are formed in the upper part of the buffer plate 44P. The buffer liquid is supplied by hoses 44H from the bottles 44C to the buffer plate 44P.

A correcting plate 45 is arranged next to the buffer supply portion 44B. The correcting plate 45 is a plate to perform concentration adjustment of the buffer liquid and has a plurality of cells arranged in the form of a matrix.

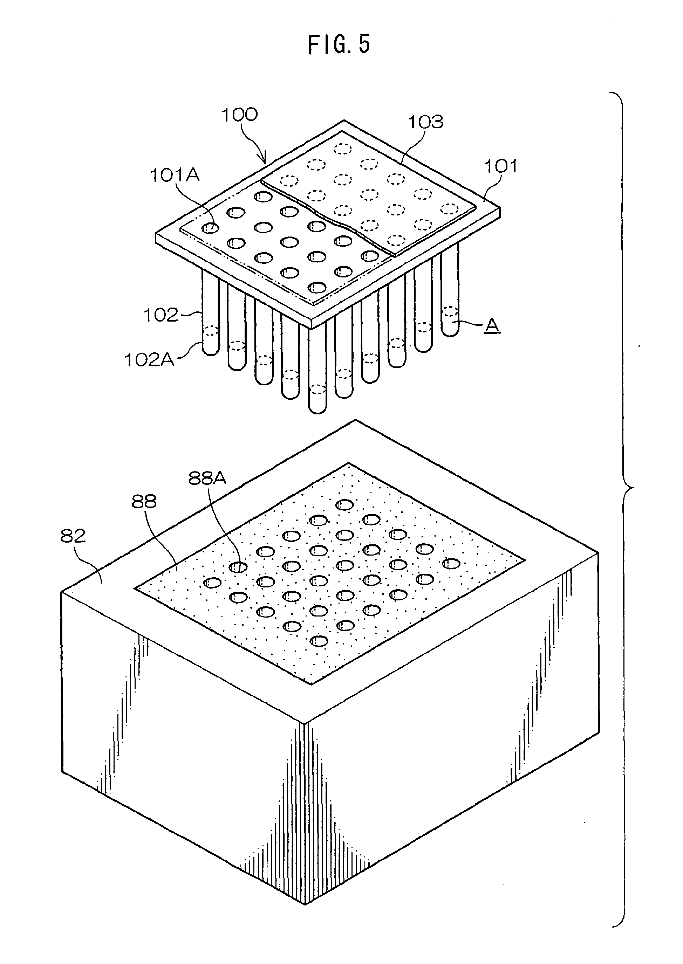

As shown in FIG 4, the cold insulation portion 46 is disposed at an opposite side of the correcting plate 45 to the buffer supply portion 44B. A sample plate 100 shown in FIG 5 is set at the cold insulation portion 46.

The sample plate 100 is constituted by a plate 101, a sample pipe 102, and an evaporation-prevention sheet 103. The sample pipe 102 is constituted by a long circular pipe, and has a distal end portion 102A of an approximate semispherical shape. An opening portion 102B side of the sample pipe 102 is attached to the plate 101.

The plate 101 has a plate-like shape and holes 101A corresponding to the opening portions 102B of the sample pipes 102 are formed thereon in the form of a matrix. The plurality of sample pipes 102 are attached to the plate 101 every hole 10 1 A basis.

The opening portion 102B of the sample pipe 102 are covered with the evaporation-prevention sheet 103. As the evaporation-prevention sheet 103, an aluminum foil or the like can be used. When the pipet chip CP (to be described later) access the interior of the sample pipe 102, the evaporation-prevention sheet 103 is penetrated by the distal end of the pipet chip CP.

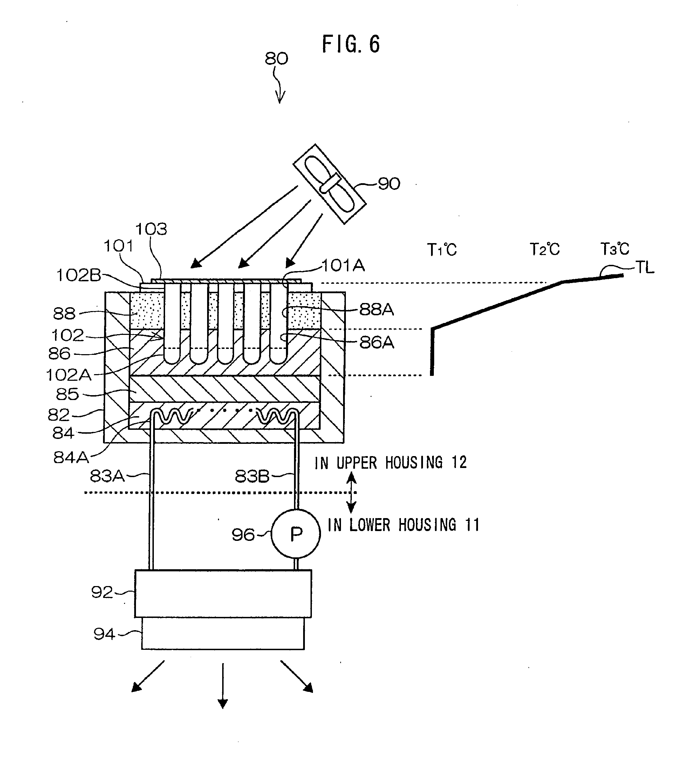

In the cold insulation portion 46, as shown in FIG 6, a cold insulation vessel 82 and a blowing fan 90 are arranged. In addition, in the lower housing 11, a radiator 92, a heat-radiation fan 94, and a pump 96 are arranged. The cold insulation unit 80 is constituted by the cold insulation vessel 82, the blowing fan 90, the radiator 92, the heat-radiation fan 94, the pump 96, and members (to be described later) accommodated in the cold insulation vessel 82.

The cold insulation vessel 82 has a box-like shape opening upward. The cold insulation vessel 82 consists of a heat insulating material and has an interior heat-insulated from the outside. The cold insulation vessel 82 accommodates a heat exchange jacket 84, a peltier portion 85, an aluminum block 86, and a heat insulating member 88 which are sequentially arranged from the bottom side.

The heat exchange jacket 84 includes a liquid flow path 84A. Hoses 83A and 83B are connected to both end portions of the liquid flow path 84A and the other end portions of the hoses 83A and 83B are connected to the radiator 92 in the lower housing 11. The pump 96 is connected to the hose 83B to circulate cooling water in the heat exchange jacket 84 and the radiator 92. The hoses 83A and 83B are connected to the radiator 92 to have a play to some extent and consist of a flexible material to make it possible to easily move the cold insulation portion 46.

The peltier portion 85 is arranged above the heat exchange jacket 84. The peltier portion 85 includes a peltier device serving as a thermoelectric cooling device and is arranged to have a cooling side (heat-absorbing side) on an upper surface and a heat-radiation side on a lower surface.

The aluminum block 86 is arranged above the peltier portion 85. Insertion holes 86A into which the distal end portions 102A of the sample pipes 102 can be inserted are formed on the upper surface side of the aluminum block 86. The insertion holes 86A are formed at positions corresponding to the sample pipes 102 arranged in the form of a matrix. The distal end portion 102A includes not only a spherical distal end, but also a portion filled with a sample. In the embodiment, the aluminum block is used as a refrigerant member. However, a copper block or the like can be used in place of the aluminum block.

The heat insulating member 88 is arranged above the aluminum block 86. The heat insulating member 88 consists of urethane foam. In the heat insulating member 88, through holes 88A through which the sample pipes 102 can be passed are formed in the form of a matrix. The through hole 88A has a diameter slightly larger than the diameter of the sample pipe 102. The sample pipe 102 is inserted through the through hole 88A. The plate 101 is arranged above the through holes 88A and the sample pipes 102 are inserted through the through holes 88A to seal the through holes 88A. The through holes 88A are formed at positions corresponding to the insertion holes 86A of the aluminum block 86.

In the embodiment, the heat insulating member 88 consists of urethane foam. However, the heat insulating member 88 can also consist of a material except for the urethane foam, for example, polystyrene foam or glass wool.

The blowing fan 90 is arranged above the cold insulation vessel 82 in the upper housing 12. The blowing fan 90 blows air above the cold insulation vessel 82 to circulate the air.

In the lower housing 11, the radiator 92, the heat-radiation fan 94, and the pump 96 are installed. The other end portion of the hose 83A connected to the heat exchange jacket 84 is connected to the radiator 92, and the hose 83B is connected to the radiator 92 through the pump 96. Cooling water in the radiator 92 is circulated with the heat exchange jacket 84 by the pump 96. The heat-radiation fan 94 to discharge air heat-radiated by the radiator 92 to the outside is arranged on the radiator 92.

A measurement chip accommodation plate 48P is set in the measurement chip stock portion 48. A plurality of measurement chips 50 is accommodated in the measurement chip accommodation plate 48P.

A measurement chip conveying mechanism 49 is arranged between the measurement chip stock portion 48 and the measurement portion 30. The measurement chip conveying mechanism 49 includes a holding arm 49A which sandwiches the measurement chip 50 from both sides to hold the measurement chip 50, a ball screw 49B which moves the holding arm 49A in a Y direction by rotation, and a rail 49C arranged in the Y direction on which the measurement chip 50 is placed. In measurement, one measurement chip 50 is placed from the measurement chip accommodation plate 48P onto the rail 49C by the measurement chip conveying mechanism 49, and moved and set in the measurement portion 30 while being held by the holding arm 49A.

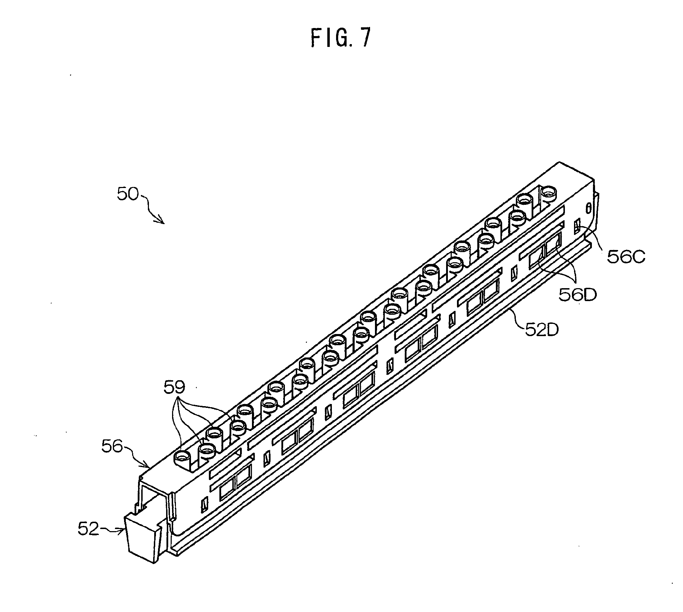

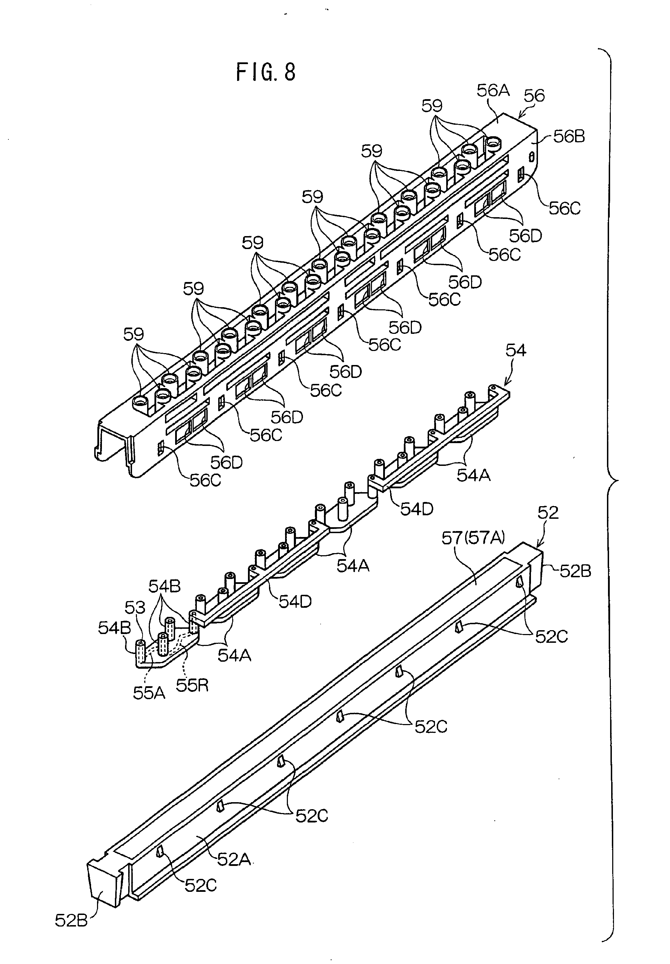

The measurement chips 50, as shown in FIGS. 7 and 8, is constituted by a dielectric block 52, a flow path member 54, and a holding member 56.

The dielectric block 52 consists of a transparent resin that is transparent to light beams and the like, and has a bar-shaped prism portion 52A having a trapezoidal cross section, and held portions 52B formed integrally to the prism portion 52A at either end thereof. A metal film 57 is formed at an upper surface of a larger one of two parallel surfaces of the prism portion 52A. The dielectric block 52 functions as a so-called prism. In measurement by the biosensor 10, a light beam is incident from one of two opposing side faces of the prism portion 52A which are not parallel to each other, and a light beam totally reflected by an interface of the metal film 57 is emitted from the other side face.

A linker layer 57A to fix protein Ta on the metal film 57 is formed on the surface of the metal film 57.

Engagement convex portions 52C engaged with the holding member 56 are formed on both side faces of the prism portion 52A along an upper side edge. A flange portion 52D engaged with the rail 49C for conveying is formed on the lower side of the prism portion 52A along a side edge.

As shown in FIG 8, the flow path member 54 has six base portions 54A, and four cylindrical members 54B are formed to stand upright on each of the base portions 54A. Respective sets of three base portions 54A are connected by the connecting member 54D at an upper part of one of the upright cylindrical members 54B on each of the three base portions 54A. The flow path member 54 consists of a soft, elastic, and flexible material, for example, amorphous polyolefin elastomer.

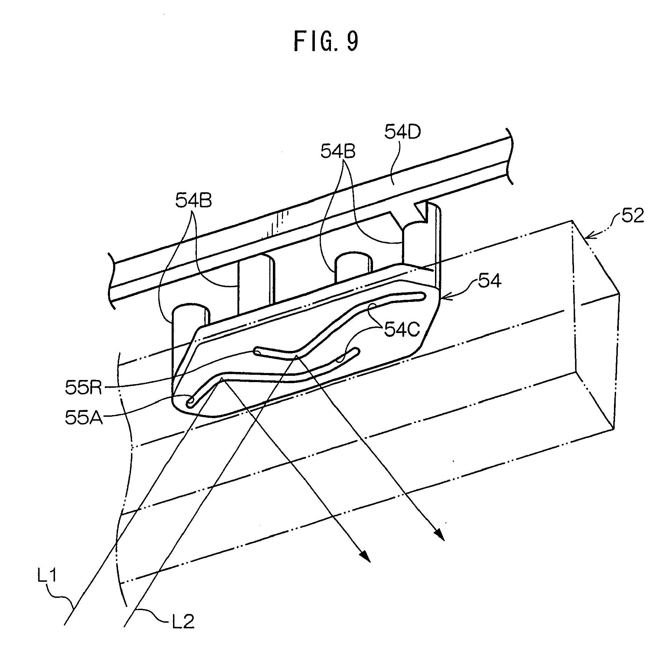

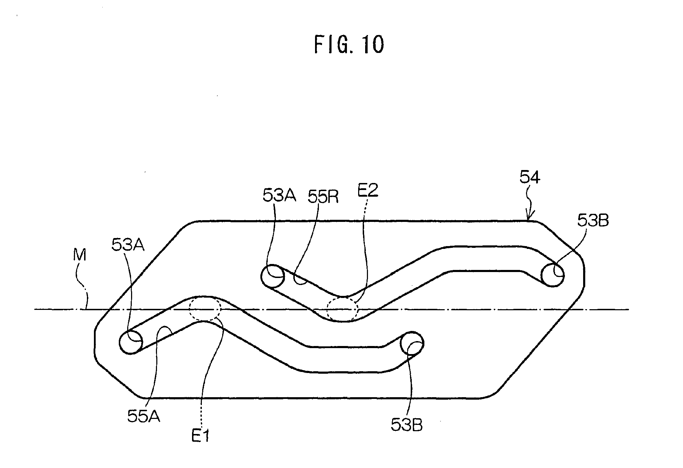

In the base portion 54A, as shown in FIGS. 9 and 10, two approximately S-shaped flow path grooves 54C are formed on the bottom side. The flow path groove 54C has end portions each communicating with a hollow portion of one of the cylindrical members 54B. The base portions 54A has a bottom surface which is brought into tight contact with an upper surface of the dielectric block 52, a space constituted between the flow path groove 54C and the upper surface of the dielectric block 52 and the hollow portion constitute a liquid flow path 55. Two liquid flow paths 55 are formed in one of the base portions 54A. In each of the liquid flow paths 55, an inlet/outlet port 53 of the liquid flow path 55 is formed in an upper end face of the cylindrical members 54B.

In this case, one of the two liquid flow paths 55 is used as a measurement flow path 55A, and the other is used as a reference flow path 55R. Measurement is performed in the state such that protein Ta is fixed on the metal film 57 (on the linker layer 57A) of the measurement flow path 55A, and no protein Ta is fixed on the metal film 57 (on the linker layer 57A) of the reference flow path 55R. Light beams L1 and L2 are incident on the measurement flow path 55A and the reference flow path 55R respectively, as shown in FIG. 9. The light beams L1 and L2, as shown in FIG 10, irradiate the S-shaped curved portions arranged on a center line M of the base portion 54A. An irradiation region of the light beam L1 in the measurement flow path 55A is called a measurement region E1, and an irradiation region of the light beam L2 in the reference flow path 55R is called a reference region E2. The reference region E2 is a region in which measurement is performed to correct data obtained from the measurement region E1 on which the protein Ta is fixed.

The holding member 56 of the measurement chip 50 has a large length and a shape obtained by forming an upper surface member 56A and two side face plates 56B like a lid. On the side face plate 56B, engagement holes 56C engaged with the engagement convex portions 52C of the dielectric block 52, and windows 56D at positions corresponding to the optical paths of the light beams L1 and L2 are formed. The holding member 56 is attached to the dielectric block 52 such that the engagement holes 56C and the engagement convex portions 52C are engaged with each other. The flow path member 54 is integrated with the holding member 56 and arranged between the holding member 56 and the dielectric block 52.

On the upper surface member 56A, receiving portions 59 are formed at positions corresponding to the cylindrical members 54B of the flow path member 54. Each of the receiving portions 59 is approximately cylindrical.

The dispensing head 20, as shown in FIG 2, is arranged in an upper part in the upper housing 12, and can be moved in a direction of an arrow X by a horizontal drive mechanism 22. The horizontal drive mechanism 22 is constituted by a ball screw 22A, a motor 22B, and a guide rail 22C. The ball screw 22A and the guide rail 22C are arranged in the X direction. As the guide rail 22C, two guide rails are parallel arranged. One of the guide rails 22C is arranged below the ball screw 22A with a predetermined interval. The dispensing head 20 is moved in the X direction along the guide rail 22C by rotation of the ball screw 22A.

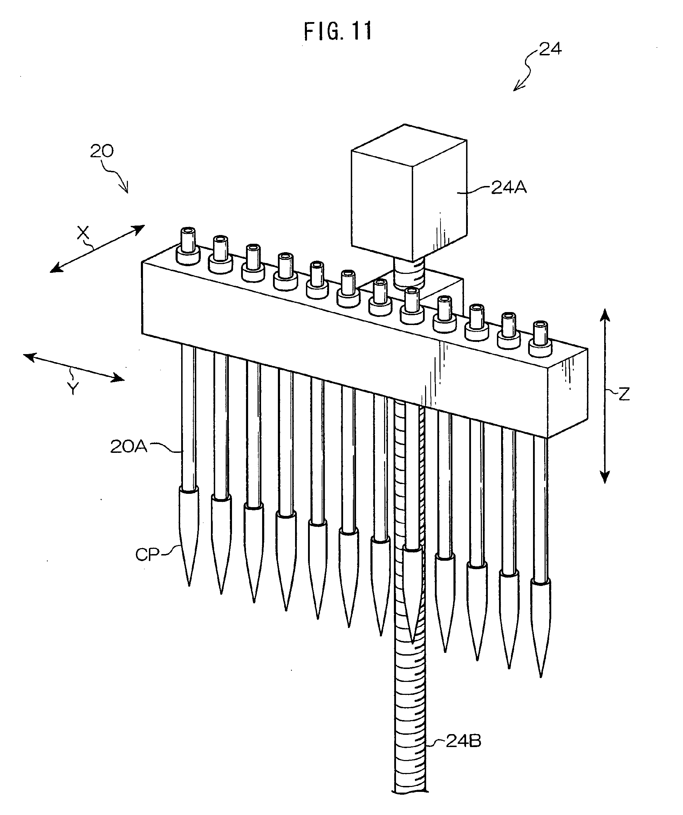

A vertical drive mechanism 24 which moves the dispensing head 20 in a direction of an arrow Z is arranged for the dispensing head 20. The vertical drive mechanism 24, as shown in FIG 11, includes a motor 24A and a drive shaft 24B arranged in the Z direction to move the dispensing head 20 in the Z direction. As shown in FIG 3, the cold insulation portion 46 (sample plate 100), the correcting plate 45, the buffer supply portion 44B (buffer plate 44P), the measurement portion 30 (measurement chip 50), the sample setting portion 40B (sample plate 40P), and the pipet chip setting portion 42B (pipet chip stocker 42P), which are accessed by the dispensing head 20 to supply liquid, are arranged in the order named in the X direction (moving direction of the dispensing head 20).

As shown in FIG 11, the dispensing head 20 has 12 dispensing pipes 20A. The dispensing pipes 20A are arranged in a line along a direction of an arrow Y orthogonal to the X direction. The two adjacent dispensing pipes 20A constitute one pair. One of the pair is to supply liquid, and the other is to discharge liquid. A pipet chip CP is attached to the distal end of the dispensing pipe 20A. The pipet chips CP are stoked in the pipet chip stocker 42P and can be exchanged as needed.

In measurement, a sample and buffer liquid are supplied to the measurement chips 50 by the dispensing pipes 20A. The supply of these liquids is performed as follows. More specifically, the dispensing head 20 is moved above the cold insulation portion 46, the sample setting portion 40B, and the buffer supply portion 44B. The sample and the buffer liquid are absorbed by the pipet chips CP attached to the six dispensing pipes 20A for supplying liquid. Amounts of absorption are amounts to be supplied into two flow paths. The pipet chips CP on the six dispensing pipes 20A which absorb the sample and the buffer liquid are inserted into one inlet/outlet ports 53 (to be referred to as "supply ports 53A" hereinafter) on the measurement flow path 55A side of the measurement chip 50, and the pipet chips CP attached to the six dispensing pipes 20A for discharging are inserted into the other inlet/outlet ports 53 (to be referred to as "discharge ports 53B" hereinafter). A half of the amount of liquid is supplied by the dispensing pipes 20A on the supply port 53A side, and the liquid is absorbed by the dispensing pipes 20A on the discharge port 53B. Subsequently, the other half of liquid in the pipet chips CP is similarly supplied to the reference flow path 55R.

The measurement portion 30 includes an optical surface plate 32, a light-emitting portion 34, and a light-receiving portion 36. On the optical surface plate 32, as shown in FIG 4, in side view, an upper part table 32A configured by a horizontal plane at the center of the upper part, a light-emitting slanted portion 32B which becomes lower in a direction leading away from the upper part table 32A, and a light-receiving slanted portion 32C disposed at the opposite side of the upper part table 32A to the light-emitting slanted portion 32B. On the upper part table 32A, the measurement chip 50 is set along the Y direction. On the light-emitting slanted portion 32B of the optical surface plate 32, a light-emitting portion 34 which emits the light beams L1 and L2 toward the measurement chip 50 is installed. The light-receiving portion 36 is installed on the light-receiving slanted portion 32C. A water-cooling jacket 32J which cools the optical surface plate 32 is provided next to the optical surface plate 32.

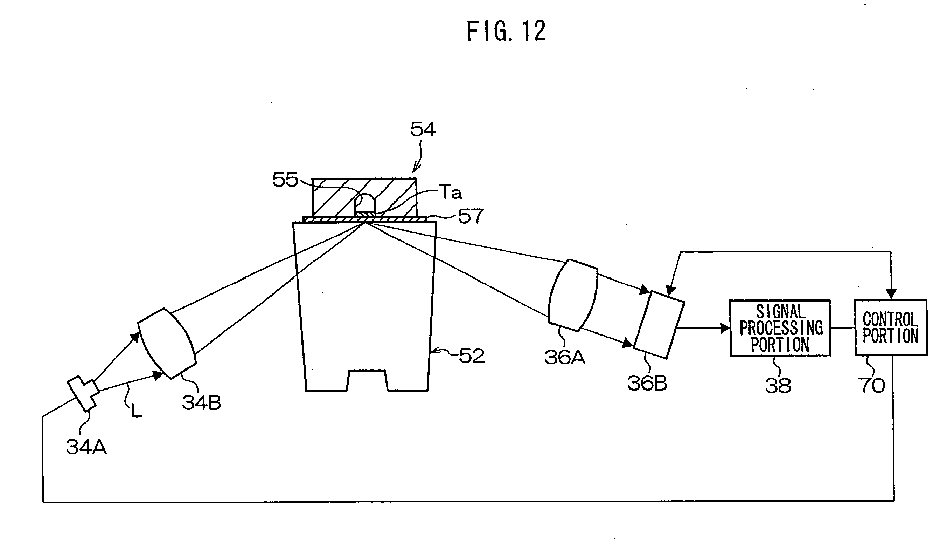

As shown in FIG 12, the light-emitting portion 34 includes a light source 34A and a lens unit 34B. The light-receiving portion 36 includes a lens unit 36A and a CCD 36B. The light source 34A is connected to a control portion 70, and the CCD 36B is connected to a signal processing portion 38 and the control portion 70.

A diverged light beam L is emitted from the light source 34A. The light beam L is changed into two light beams L1 and L2 through the lens unit 34B. The light beams L1 and L2 are incident on the measurement region E1 and the reference region E2 of the dielectric block 52 arranged on the optical surface plate 32. In the measurement region E1 and the reference region E2, the light beams L1 and L2 include various incidence angle components with respect to an interface between the metal film 57 and the dielectric block 52 and are incident at an angle equal to or larger than a total reflection angle. The light beams L 1 and L2 are totally reflected by the interface between the dielectric block 52 and the metal film 57. The totally reflected light beams L1 and L2 are also reflected at various reflection angle components. The totally reflected light beams L1 and L2 are received by the CCD 36B through the lens unit 36A and photoelectrically converted respectively, and photodetection signals are output to the signal processing portion 38. In the signal processing portion 38, predetermined processing is performed on the basis of the input photodetection signals to calculate refractive index change data in the measurement region E1 and the reference region E2.

The refractive index change data are calculated on the basis of dark line positions of the totally reflected light beams L1 and L2. The light beams L1 and L2 being incident at specific incidence angles on the interface of the metal film 57 excite surface plasmon on the interface between the metal film 57 and the protein Ta. For this reason, intensities of the reflected lights of the light beams L1 and L2 being incident at the incidence angles sharply decrease, and the reflected lights are observed as dark lines. The incidence angles of the light beams L1 and L2 observed as the dark lines are total reflection attenuation angles θ_{SP}, and changes of the total reflection attenuation angles θ_{SP} depending on a reaction between the protein Ta and a sample A are refractive index change data. The refractive index change data are output to the control portion 70 to measure the reaction between the protein Ta and the sample A.

Inside the upper housing 12 along the X direction of an upper corner part in the upper housing 12, a radiator 60 is provided. In the radiator 60, metal thin plates are stacked to form flow paths, and temperature control water is caused to flow in the flow paths to perform heat exchange between the temperature control wafer and air in the upper housing 12. On the opposite side of the radiator 60 to the upper housing 12, the radiator blowing fan 62 is provided. The air heat-exchanged by the radiator 60 is sent by the radiator blowing fan 62 inside the upper housing 12 in the Y direction. A circulation hose 66 is connected to the radiator 60. A horizontal blowing fan 64 is provided inside the upper housing 12 along the Y direction which is adjacent to a position at which the radiator 60 is installed. The air from the radiator 60 side is sent by the horizontal blowing fan 64 inside the upper housing 12 in the X direction.

As shown in FIGS. 2 and 4, two circulation hoses 66A and 66B are connected to the radiator 60. The circulation hose 66A is arranged from the upper housing 12 to the interior of the lower housing 11 and connected to a circulator 68 arranged in the lower housing 11. A pump device (not shown) to circulate water is arranged in the circulator 68. A circulation hose 66C which sends water from the circulator 68 to the water-cooling jacket 32J is arranged between the circulator 68 and the water-cooling jacket 32J. The circulation hose 66B which sends temperature control water to the radiator 60 is connected to the water-cooling jacket 32J.

Temperature adjustment in the upper housing 12 in the embodiment will be described below.

The temperature control water sent from the circulator 68 flows to the water-cooling jacket 32J through the circulation hose 66C and passes through the water-cooling jacket 32J. In this manner, the optical surface plate 32 heated by the light source 34A, the CCD 36B, and the like is cooled.

The temperature control water sent from the water-cooling jacket 32J is supplied to the radiator 60 through the circulation hose 66B. Heat exchange is performed between the temperature control water flowing in the radiator 60 and the air near the radiator 60. The heat-exchanged temperature control water is then returned from the radiator 60 to the circulator 68 through the circulation hose 66A and circulated in the above flow path.

On the other hand, the air heat-exchanged by the radiator 60 is blown by the radiator blowing fan 62 in the Y direction. Thereafter, the air is blown by the horizontal blowing fan 64 in the X direction. In this manner, the air in the upper housing 12 is stirred to uniform the temperature in the upper housing 12.

In the embodiment, the temperature adjustment is performed as described above in the upper housing 12. Since the sample stock portion 40 in which a sample is stocked, the measurement chip stock portion 48 in which the measurement chip 50 is stocked, the buffer stock portion 44 in which buffer liquid is stocked, and the measurement portion 30 which performs measurement are arranged in the upper housing 12 the temperature of which is adjusted, differences of the temperatures of these portions can be reduced. Therefore, by using these portions, measurement can be accurately performed.

Since the temperature adjustment in the upper housing 12 is performed as a whole and temperature adjustment for each measurement is not required, a throughput of measurement can be reduced.

Cooling and dew condensation prevention in the cold insulation unit 80 in the embodiment will be described below.

When the upper side of the peltier portion 85 in the cold insulation vessel 82 of the cold insulation unit 80 is cooled, the aluminum block 86 is also cooled. Since the aluminum block 86 has a high heat conductivity, a temperature of the entire aluminum block 86 is an almost constant temperature, i.e., T1°C as indicated by a temperature gradient line TL in FIG 6.

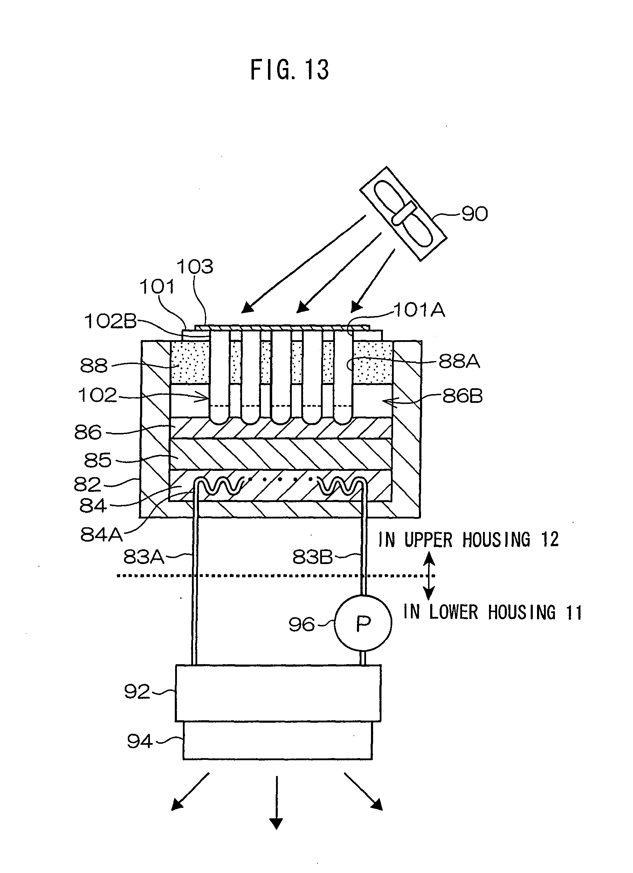

The cooled aluminum block 86 is heat-insulated from the outside by the heat insulating member 88 to keep a low temperature. On the other hand, in the heat insulating member 88, as shown in FIG 6, a temperature gradient exhibits between the aluminum block 86 side and the upper surface side exposed outside (in the upper housing 12), and the upper surface temperature is T2°C close to a temperature T3°C in the upper housing 12. In this manner, dew condensation on the sample plate 100 set on the upper side of the heat insulating member 88 is suppressed.
Since the thickness of the heat insulating member 88 is limited, the upper surface temperature of the heat insulating member 88 may be lower than the temperature in the upper housing 12 (T2 < T3). In this case, dew condensation occurs on the sample plate 100. In occurrence of the dew condensation on the evaporation-prevention sheet 103 of the sample plate 100, when the pipet chip CP penetrates the evaporation-prevention sheet 103 to access the sample in the sample pipe 102, a water droplet is got into the sample pipe 102 to change the concentration of the sample. In the embodiment, the air is blown to the upper side of the heat insulating member 88 by the blowing fan 90 to prevent low-temperature air from being accumulated. In this manner, the occurrence of dew condensation on the sample plate 100 can be prevented.
In the embodiment, the insertion hole 86A is formed in the aluminum block 86 of the cold insulation unit 80 to configure a cooling space. However, as shown in FIG 13, a gap 86B is formed between the aluminum block 86 and the heat insulating member 88, and the gap 86B may be used as a cooling space.

In the embodiment, as the measurement apparatus, a surface plasmon sensor is exemplified. However, the measurement apparatus is not limited to the surface plasmon sensor. An aspect of the present invention can be applied to all other biosensor, for example, a quartz crystal microbalance (QCM) measurement technique, an optical measurement technique using a functionalized surface from gold colloidal particles to ultrafine particles, and the like.

As another biosensor using total reflection attenuation, a leaky mode detector can be cited. The leaky mode sensor is constituted by a dielectric member and a thin film constituted by a clad layer and an optical waveguide layer sequentially stacked on the dielectric member. One surface of the thin film serves as a sensor surface, and the other surface serves as a light incident surface. When light is incident on the light incident surface to satisfy total reflection conditions, a part of the light passes through the clad layer and is received by the optical waveguide layer. When a waveguide mode is excited on the optical waveguide layer, reflected light on the light incident surface is largely attenuated. An incidence angle at which the waveguide mode is excited changes depending on a refractive index of a medium on the sensor surface like a surface plasmon resonance angle. The attenuation of the reflected light is detected to make it possible to measure reaction on the sensor surface.

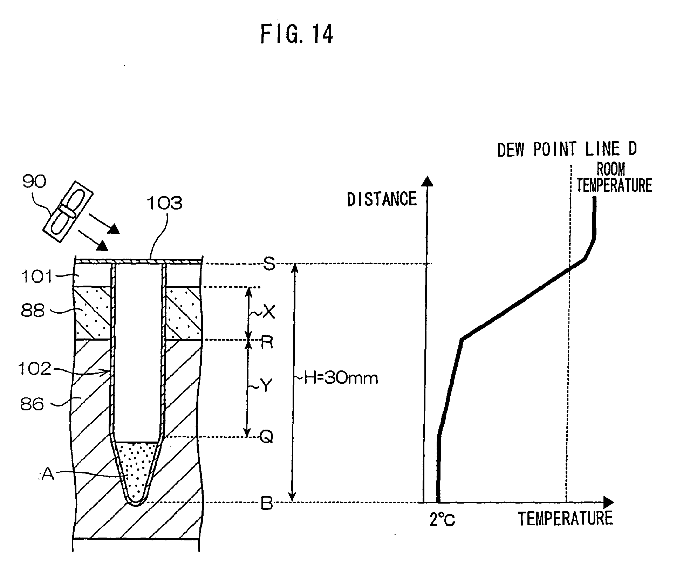

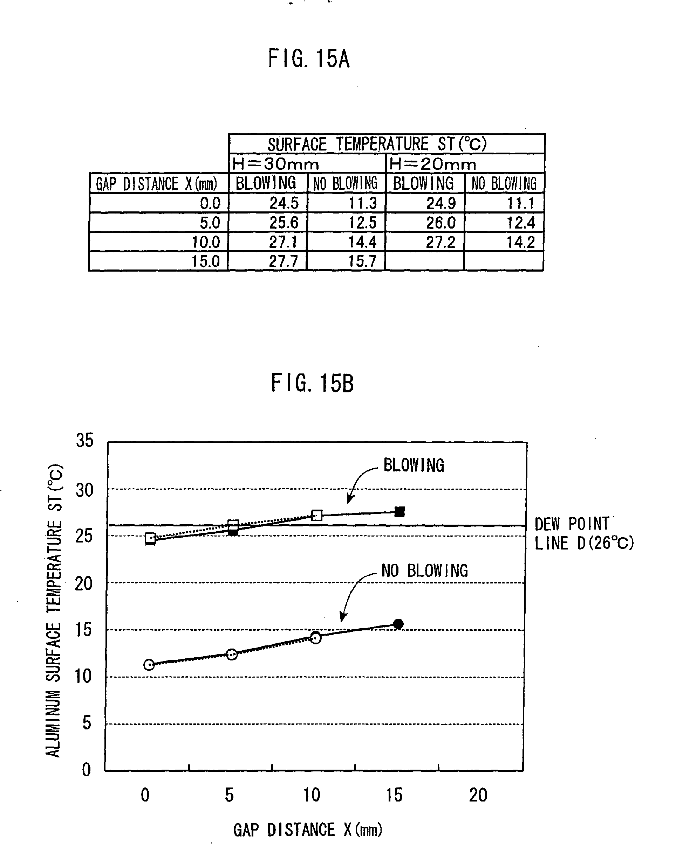

[Example] By using the cold insulation unit 80 described in the embodiment, in an environment of a room temperature of 31 °C, the sample A was cooled, and a temperature gradient from a distal end B of the sample pipe 102 to a surface S of the sample plate 100 was measured. As shown in FIG 14, a length H of the sample pipe 102 was given by H = 30 mm, the thickness (gap distance X) of the heat insulating member 88 was set at 10 mm, and a cooling temperature on the aluminum block 86 was set at 2°C. In this case, a temperature of the distal end B to a liquid level Q was 2°C, a temperature of an interface portion R between the aluminum block 86 and the heat insulating member 88 was 2.1°C, and a temperature of the surface S (to be referred to as a "surface temperature ST" hereinafter) was 27.1°C. Since the surface temperature ST is higher than a dew point line D = 26.0°C when the room temperature of 31°C is set, dew condensation is prevented.
A change of the surface temperature ST was measured when the gap distance X was changed. In the case in which air was blown by the blowing fan 90 and the case in which air was not blown by the blowing fan 90, the changes were measured when the length H of the sample pipe 102 was set at 30 mm and 20 mm respectively. FIG 15A shows measurement results of the surface temperature ST obtained when the gap distance X is given by X = 0 mm, 5 mm, 10 mm, and 15 mm (only when H = 30 mm). As shown in FIG 15B, regardless of the length H of the sample pipe 102, the relationships between the gap distances X and the surface temperatures ST are almost equal to each other. As is apparent from FIG 15B, when the gap distance X exceeds about 7 mm when blowing is performed, the surface temperature ST is higher than the dew point line D. Therefore, the gap distance X is preferably equal to or larger than 7 mm, and more preferably equal to or larger than 10 mm. In order to reliably cool the sample A, the liquid level Q of the sample A is preferably lower than the interface portion R. Therefore, the distance Y from the liquid level Q to the interface portion R is preferably 0 or more.

An aspect of the present invention provides a measurement apparatus which decreases a temperature difference between objects used in measurement and reduce a throughput of the measurement, and also provides a cold insulation unit which can perform cold insulation for a sample with a simple configuration and a measurement apparatus having the cold insulation unit.

A first aspect of the present invention provides a measurement apparatus, comprising: a housing which accommodates a measurement portion which supplies a sample to a test substance fixed to a measurement chip to measure a reaction between the test substance and the sample, a sample stock portion which stocks a plurality of samples, a measurement chip stock portion which stocks a plurality of measurement chips, and a buffer stock portion which stocks a buffer liquid to be supplied to the test substance, the housing comprising a heat insulating material; a radiator provided in the housing; a circulating section which circulates liquid supplied to the radiator; and a blowing section which diffuses air heat-exchanged by the radiator into the housing.

In the measurement apparatus according to an aspect of the present invention, the measurement portion, the sample stock portion, the measurement chip stock portion, the buffer stock portion are accommodated in the housing consisting of the heat insulating material. In the housing, the radiator is arranged to circulate liquid supplied to the radiator by the circulating section. Near the radiator in the housing, heat exchange between the liquid in the radiator and the air in the housing is performed, and the air heat-exchanged is diffused in the housing by the blowing section.

According to the above-described aspect, the air heat-exchanged by the radiator is diffused in the housing to uniform the temperature in the entire housing. In this manner, temperature adjustment for the sample stocked in the sample stock portion, the measurement chip stocked in the measurement stock portion, the buffer liquid stocked in the buffer stock portion in the housing and the measurement portion can be performed as a whole. The temperature differences between the sample, the measurement chip, the buffer liquid, and the measurement portion can be reduced without temperature adjustment for each measurement. Therefore, temperature adjustment for a large number of measurement chips and samples can be performed before measurement, and a throughput of measurement can be reduced.

In the above-described aspect, the housing may accommodate a liquid supply mechanism to supply the sample and the buffer liquid to the measurement chip.

In this manner, the liquid supply mechanism which access a test object is also arranged in the housing to make it possible to perform temperature adjustment for the liquid supply mechanism.

In the above-described aspect, the measurement portion may have a surface plate on which the measurement chip is set, and the liquid supplied to the radiator may also be supplied to a water-cooling jacket for cooling the surface plate.

Since an optical device, a substrate, and the like for measurement are arranged in the measurement portion, the temperature of the measurement portion increases more easily than another portion. Therefore, a water-cooling jacket is arranged on the surface plate on which the measurement chip is set. The liquid supplied to the radiator is also supplied to the water-cooling jacket to make it possible to circulate the liquid between the radiator and the water-cooling jacket of the surface plate by one circulating section.

In the above-described aspect, the blowing section further may comprise a first blowing section and a second blowing section, the first blowing section may be provided at an opposite side of the radiator arranged inside the housing to the housing, and the second blowing section may be provided inside the housing adjacent to a position at which the radiator is provided.

When the first and second blowing sections are arranged, air in the housing is stirred, and a temperature in the housing is uniformed.

A second aspect of the present invention provides a cold insulation unit which performs cold insulation for a sample accommodated in a long sample pipe, comprising: a cold insulation vessel having an interior that is heat-insulated from the outside by a heat insulating material; a cooling section provided inside the cold insulation vessel and having a cooling side disposed toward the inside of the cold insulation vessel; a refrigerant member disposed at the cooling side of the cooling section, constituting a cooling space to cool a distal end portion of the sample pipe, and cooled by the cooling section; and a heat insulating member disposed at an upper side of the refrigerant member, having a through hole through which the sample pipe passes from an upper side and which is sealed by the sample pipe, and having a heat insulating material.

The cold insulation unit according to an aspect of the present invention has the cold insulation vessel heat-insulated by the heat insulating material, and the cooling section and the refrigerant member are arranged inside the cold insulation vessel.

As the cooling section, a thermoelectric cooling device such as a peltier device or a seebeck device can be used. As the refrigerant member, a material such as aluminum having a high heat conductivity can be used.

The refrigerant member is arranged on a cooling side of the cooling section and cooled by the cooling section. The heat insulating member is arranged above the refrigerant member, and a sample pipe is set from the upper side of the heat insulating member. A through hole through which the sample pipe can be passed is formed in the heat insulating member, and the sample pipe is passed through the through hole. A distal end portion of the sample pipe penetrates the through hole of the heat insulating member to reach a cooling space, and cold insulation is performed here.

On the other hand, the through hole formed in the heat insulating member is sealed by inserting the sample pipe through the through hole. Since an inlet portion (upper opening portion) of the sample pipe is open above the heat insulating member, a pipet can directly access the sample pipe.

According to the above-described aspect, a plurality of through holes are formed in the heat insulating member to make it possible to perform cold insulation for sample pipes the number of which corresponds to the number of through holes with a simple configuration.

Since the heat insulating member is formed between the inlet portion of the sample pipe and the distal end portion at which a sample is reserved, a temperature of the inlet portion can be approximated to an outside temperature, and dew condensation of the inlet portion can be suppressed.

In the above-described aspect, a third blowing section which circulates air above the sample pipe may be provided above the heat insulating member.

When the third blowing section is arranged, cold accumulated in the inlet portion of the sample pipe can be prevented, and dew condensation of the inlet portion of the sample pipe can be more reliably suppressed. As the blowing section, a blowing device such as a fan can be used.

In the above-described aspect, the cooling space may comprise a cooling hole formed at an upper part of the refrigerant member into which the sample pipe can be inserted, and the through hole may be formed at a position corresponding to the cooling hole.

In the above-described aspect, the cooling space may comprise a gap between the refrigerant member and the heat insulating member, and the through hole may be formed at a position corresponding to the gap.

In the above-described aspect, a distance from a surface side of the heat insulating member to an upper surface of the refrigerant member may be not less than 7 mm.
In order to achieve a heat insulating effect to prevent dew condensation on the surface of the cold insulation unit, the distance from the surface side of the heat insulating member to the upper surface of the refrigerant member is preferably 7 mm or more. In order to more reliably prevent dew condensation, the distance is preferably 10 mm or more.
The longer distance from the surface side of the heat insulating member to the upper surface of the refrigerant member is provided, the better heat insulating effect is obtained. However, in order to spoil the cooling effect of the sample, a liquid level of the sample is preferably equal to or lower than the upper surface of the refrigerant member.

When a cooling hole is formed in the refrigerant member and the distal end portion of the sample pipe is inserted into the cooling hole, the sample can be efficiently cooled.

In the above-described aspect, the cold insulation unit may comprise: a heat exchange member disposed outside the cooling section and having a liquid flow path formed inside thereof; and an external discharging section which discharges heat exchanged with the cooling section by the heat exchange member to the outside of the cold insulation vessel.

In the above-described cold insulation unit, the heat exchange member is arranged outside the cooling section, i.e., on a heat-radiating side opposing the cooling side, and heat exchange with the cooling section is performed by the heat exchange member. As the heat exchange member, a jacket or the like including inside a flow path for fluid can be used. Heat absorbed by the heat exchange member is discharged by the external discharging section to the outside of the cold insulating vessel. The external discharging section can be constituted by a pump, a hose, and the like to circulate a fluid.

According to the above-described aspect, heat generated by the cooling section can be efficiently discharged to the outside of the cold insulation vessel.

In the above-described aspect, the external discharging section may have a length allowing play and may consist of a material having flexibility.

According to the above-described aspect, the cold insulation vessel can be easily moved.

A third aspect of the present invention provides a measurement apparatus comprising: the cold insulation unit according to the second aspect of the present invention; and a liquid supply mechanism which can access the sample pipe, wherein a sample in the sample pipe is supplied to a physiologically active substance to measure a reaction between the physiologically active substance and the sample.

According to the above-described aspect, without arranging a moving mechanism on the cold insulation vessel side, the liquid supply mechanism is operated to make it possible to access a plurality of cold-insulated samples.

In the above-described aspect, the cold insulation unit may include a heat exchange member disposed outside the cooling section and having a liquid flow path formed inside thereof, and an external discharging section which discharges heat exchanged with the cooling section by the heat exchange member to the outside of the cold insulation vessel, and the cold insulation vessel of the cold insulation unit may be disposed in a temperature control space of the measurement apparatus, and heat may be discharged by the external discharging section to the outside of the temperature control space.

When the cold insulation vessel is arranged in a temperature adjustment space of the measurement apparatus, the heat is preferably discharged to the outside of the temperature adjustment space not to influence the temperature in the temperature adjustment space.

In the first aspect of the present invention, the measurement apparatus may comprise the cold insulation unit according to the second aspect of the present invention.

According to the above-described aspect, a temperature in the entire housing becomes uniform, temperature adjustment for the sample stocked in the sample stock portion, the measurement chip stocked in the measurement chip stock portion, the buffer liquid stocked in the buffer stock portion in the housing, and the measurement portion can be performed as a whole, and the temperature differences between the sample, the measurement chip, the buffer liquid, and the measurement portion can be reduced without temperature adjustment for each measurement. Temperature adjustment for a large number of measurement chips and samples can be performed before measurement, and a throughput of measurement can be reduced. Cold insulation for the samples can be performed with a simple configuration, and dew condensation of the inlet portion of the sample pipe can be suppressed.

In the above-described aspect, the cold insulation unit may include a heat exchange member disposed outside the cooling section and having a liquid flow path formed inside thereof, and an external discharging section which discharges heat exchanged with the cooling section by the heat exchange member to the outside of the cold insulation vessel.

According to the above-described aspect, a temperature in the entire housing becomes uniform, temperature adjustment for the sample stocked in the sample stock portion, the measurement chip stocked in the measurement chip stock portion, the buffer liquid stocked in the buffer stock portion in the housing, and the measurement portion can be performed as a whole, and the temperature differences between the sample, the measurement chip, the buffer liquid, and the measurement portion can be reduced without temperature adjustment for each measurement. Temperature adjustment for a large number of measurement chips and samples can be performed before measurement, and a throughput of measurement can be reduced. Heat generated by the cooling section can be efficiently discharged to the outside of the cold insulation vessel.

In the above-described aspect, the cold insulation vessel of the cold insulation unit may be disposed in a temperature control space of the measurement apparatus, and heat may be discharged by the external discharging section to the outside of the temperature control space.

According to the above-described aspect, a temperature in the entire housing becomes uniform, temperature adjustment for the sample stocked in the sample stock portion, the measurement chip stocked in the measurement chip stock portion, the buffer liquid stocked in the buffer stock portion in the housing, and the measurement portion can be performed as a whole, and the temperature differences between the sample, the measurement chip, the buffer liquid, and the measurement portion can be reduced without temperature adjustment for each measurement. Temperature adjustment for a large number of measurement chips and samples can be performed before measurement, and a throughput of measurement can be reduced. When the cold insulation vessel is arranged in the temperature adjustment space of the measurement apparatus, heat is preferably discharged to the outside of the temperature adjustment space not to influence the temperature in the temperature adjustment space.

In the above-described aspect, the housing may accommodate a liquid supply mechanism to supply the sample and the buffer liquid to the measurement chip.

According to the above-described aspect, temperature adjustment for the liquid supply mechanism can be performed, cold insulation for the sample pipe can be performed with a sample configuration, and dew condensation of the inlet portion of the sample pipe can be suppressed.

In the above-described aspect, the measurement portion may have a surface plate on which the measurement chip is set, and the liquid supplied to the radiator may also be supplied to a water-cooling jacket for cooling the surface plate.

According to the above-described aspect, the liquid can be circulated between the radiator and the water-cooling jacket of the surface plate by one circulating section, cold insulation for the sample pipe can be performed with a simple configuration, and dew condensation of the inlet portion of the sample pipe can be suppressed.

Since an aspect of the present invention has the above configuration, a temperature difference between objects to be measured can be reduced, a throughput of measurement can be shortened, and cold insulation for a sample can be performed with a simple configuration.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A measurement apparatus, comprising:
a housing which accommodates a measurement portion which supplies a sample to a test substance fixed to a measurement chip to measure a reaction between the test substance and the sample, a sample stock portion which stocks a plurality of samples, a measurement chip stock portion which stocks a plurality of measurement chips, and a buffer stock portion which stocks a buffer liquid to be supplied to the test substance, the housing comprising a heat insulating material;
a radiator provided in the housing;
a circulating section which circulates liquid supplied to the radiator; and
a blowing section which diffuses air heat-exchanged by the radiator into the housing.

2. The measurement apparatus of claim 1, wherein
the housing accommodates a liquid supply mechanism to supply the sample and the buffer liquid to the measurement chip.

3. The measurement apparatus of claim 1 or 2, wherein
the measurement portion has a surface plate on which the measurement chip is set, and
the liquid supplied to the radiator is also supplied to a water-cooling jacket for cooling the surface plate.

4. The measurement apparatus according to any one of claims 1 to 3, wherein
the blowing section further comprises a first blowing section and a second blowing section, the first blowing section is provided at an opposite side of the radiator arranged inside the housing to the housing, and the second blowing section is provided inside the housing adjacent to a position at which the radiator is provided.

5. A cold insulation unit which performs cold insulation for a sample accommodated in a long sample pipe, comprising:
a cold insulation vessel having an interior that is heat-insulated from the outside by a heat insulating material;
a cooling section provided inside the cold insulation vessel and having a cooling side disposed toward the inside of the cold insulation vessel;
a refrigerant member disposed at the cooling side of the cooling section, constituting a cooling space to cool a distal end portion of the sample pipe, and cooled by the cooling section; and
a heat insulating member disposed at an upper side of the refrigerant member, having a through hole through which the sample pipe passes from an upper side and which is sealed by the sample pipe, and having a heat insulating material.

6. The cold insulation unit of claim 5, wherein
a third blowing section which circulates air above the sample pipe is provided above the heat insulating member.

7. The cold insulation unit of claim 5 or 6, wherein
the cooling space comprises a cooling hole formed at an upper part of the refrigerant member into which the sample pipe can be inserted, and the through hole is formed at a position corresponding to the cooling hole.

8. The cold insulation unit of claim 5 or 6, wherein
the cooling space comprises a gap between the refrigerant member and the heat insulating member, and the through hole is formed at a position corresponding to the gap.

9. The cold insulation unit according to any one of claims 5 to 8, wherein
a distance from a surface side of the heat insulating member to an upper surface of the refrigerant member is not less than 7 mm.

10. The cold insulation unit according to any one of claims 5 to 8, wherein
a distance from a surface side of the heat insulating member to an upper surface of the refrigerant member is not less than 10 mm.

11. The cold insulation unit according to any one of claims 5 to 10, further comprising:
a heat exchange member disposed outside the cooling section and having a liquid flow path formed inside thereof; and
an external discharging section which discharges heat exchanged with the cooling section by the heat exchange member to the outside of the cold insulation vessel.

12. The cold insulation unit of claim 11, wherein
the external discharging section has a length allowing play and consists of a material having flexibility.

13. A measurement apparatus comprising:
the cold insulation unit according to any one of claims 5 to 12; and
a liquid supply mechanism which can access the sample pipe, wherein
a sample in the sample pipe is supplied to a physiologically active substance to measure a reaction between the physiologically active substance and the sample.

14. The measurement apparatus of claim 13, wherein
the cold insulation unit includes a heat exchange member disposed outside the cooling section and having a liquid flow path formed inside thereof, and an external discharging section which discharges heat exchanged with the cooling section by the heat exchange member to the outside of the cold insulation vessel, and
the cold insulation vessel of the cold insulation unit is disposed in a temperature control space of the measurement apparatus, and heat is discharged by the external discharging section to the outside of the temperature control space.

15. The measurement apparatus of claim 1, comprising
the cold insulation unit of claim 5.

16. The measurement apparatus of claim 15, wherein
the cold insulation unit includes a heat exchange member disposed outside the cooling section and having a liquid flow path formed inside thereof, and an external discharging section which discharges heat exchanged with the cooling section by the heat exchange member to the outside of the cold insulation vessel.

17. The measurement apparatus of claim 16, wherein
the cold insulation vessel of the cold insulation unit is disposed in a temperature control space of the measurement apparatus, and heat is discharged by the external discharging section to the outside of the temperature control space.

18. The measurement apparatus of claim 15, wherein
the housing accommodates a liquid supply mechanism to supply the sample and the buffer liquid to the measurement chip.

19. The measurement apparatus of claim 15, wherein
the measurement portion has a surface plate on which the measurement chip is set, and
the liquid supplied to the radiator is also supplied to a water-cooling jacket for cooling the surface plate.
